# EUROPÄISCHE PATENTSCHRIFT

(11) **EP 0 426 617 B1**
(45) Veröffentlichungstag und Bekanntmachung des Hinweises auf die Patenterteilung: **22.05.1996**
(21) Anmeldenummer: 90810813.7
(22) Anmeldetag: 23.10.1990
(51) Int. Cl.: C09B 62/04, D06P 1/382

(54) **Faserreaktive Formazanfarbstoffe, Verfahren zu deren Herstellung und deren Verwendung**
Fibre reactive formazan dyes, process for their preparation and their use
Colorants formazanes réactifs avec les fibres, procédé pour leur préparation et leur utilisation

(30) Priorität: 01.11.1989 CH 3940/89
(43) Veröffentlichungstag der Anmeldung: 08.05.1991
(73) Patentinhaber: CIBA-GEIGY AG, CH-4002 Basel (CH)
(72) Erfinder: Tzikas, Athanassios, Dr., CH-4133 Pratteln (CH); Lauk, Urs, Dr., CH-8047 Zürich (CH)

(56) Entgegenhaltungen:
- EP-A- 0 333 656
- DE-A- 3 434 818
- GB-A- 2 172 896
- CHEMICAL ABSTRACTS, Band 101, Nr. 8, August 1984, Seiten 65-66, Zusammenfassung Nr.56482e, Columbus, Ohio, US.

## Beschreibung

Die vorliegende Erfindung betrifft neue faserreaktive Formazanfarbstoffe, Verfahren zu deren Herstellung und die Verwendung dieser Farbstoffe zum Färben und Bedrucken von Fasermaterialien.

Aus der GB-A 2 172 896 sind bereits Formazanfarbstoffe der unten angegebenen Formel (1), worin Z einen Rest -NHX bedeutet und X Wasserstoff oder gegebenenfalls substituiertes Alkyl oder Phenyl ist, bekannt. Diese vermögen jedoch nicht alle Wünsche bezüglich Applikation und Echtheiten zu erfüllen, sodass die Bereitstellung weiterer verbesserter faserreaktiver Formazanfarbstoffe erwünscht ist.

Gegenstand der vorliegenden Erfindung sind daher faserreaktive Formazanfarbstoffe der Formel 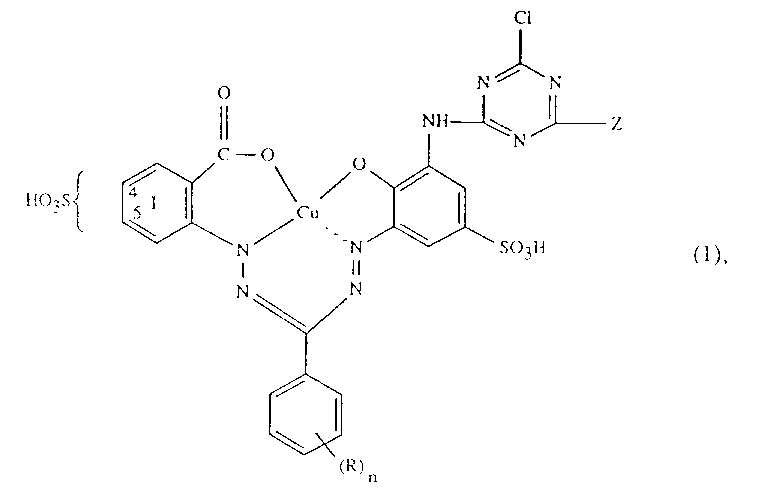 worin n die Zahl 0, 1, 2 oder 3 ist, und (R)ₙ für 0 bis 3 Substituenten, unabhängig voneinander, aus der Gruppe Halogen, C₁₋₄-Alkyl, C₁₋₄-Alkoxy, C₂₋₄-Alkanoylamino, Hydroxy, Carboxy und Sulfo steht, und Z ein Rest der Formel 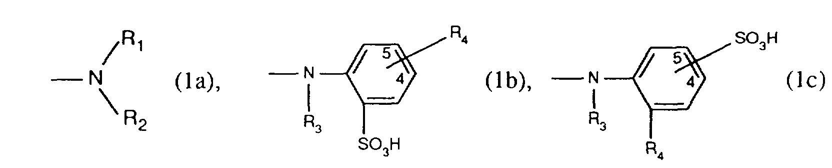 oder 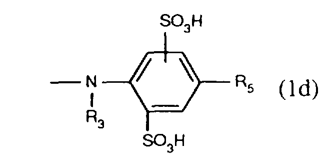 ist,
worin R₁ C₁₋₄-Alkyl, R₂ C₁₋₄-Alkyl, das durch Hydroxy, Halogen, Cyan, Carboxy, C₁₋₄-Alkoxy, Hydroxy-C₂₋₄-alkoxy, HO-(CH₂CH₂-O)₂₋₄-, Sulfo oder Sulfato substituiert ist, R₃ C₁₋₄-Alkyl, das durch Hydroxy, Halogen, Cyan, Carboxy, C₁₋₄-Alkoxy, Hydroxy-C₂₋₄-alkoxy, Sulfo oder Sulfato substituiert sein kann, R₄ Wasserstoff, Halogen, C₁₋₄-Alkyl, C₁₋₄-Alkoxy, Carboxy oder Sulfo, R₅ Halogen, C₁₋₄-Alkyl oder C₁₋₄-Alkoxy, und m die Zahl 0, 1, 2 oder 3 sind, und R₄ in Formel (1b) und die Sulfogruppe in Formel (1c) in 4- oder 5-Stellung an den Phenylring gebunden sind.

In der Formel (1) sowie in den nachfolgenden Formeln haben die geschweiften Klammern die Bedeutung, dass die jeweilige Gruppe an die 4- oder 5-Position des Benzolringes 1 gebunden sein kann.

In der Formel (1) sowie in den nachfolgenden Formeln sind die Reaktivfarbstoffe in der Form ihrer freien Säure angegeben. Gegenstand der Erfindung sind selbstverständlich auch die Salze der freien Säure.

Als C₁₋₄-Alkyl kommt für R in Formel (1), R₁ in Formel (1a), R₄ in Formel (1b), und R₅ in Formel (1d) z.B. Methyl, Äthyl, Propyl, Isopropyl, Butyl, tert.-Butyl, sek.-Butyl oder Isobutyl, insbesondere Methyl, in Betracht.

Als C₁₋₄-Alkoxy kommt für R in Formel (1), R₄ in Formel (1b), und R₅ in Formel (1d) z.B. Methoxy, Athoxy, Propoxy, Isopropoxy, Butoxy, tert.-Butoxy, sek.-Butoxy oder Isobutoxy, insbesondere Methoxy, in Betracht.

Als Halogen kommt für R in Formel (1), R₄ in Formel (1b), und R₅ in Formel (1d) z.B. Fluor, Brom oder vorzugsweise Chlor in Betracht.

Als C₂₋₄-Alkanoylamino kommt für R in Formel (1) z.B. Acetylamino, Propionylamino oder Butyrylamino in Betracht.

Als C₁₋₄-Alkyl kommt für R₃ in den Formeln (1b), (1c) und (1d) z.B. Methyl, Äthyl, Propyl, Isopropyl, sek-.Butyl, Isobutyl, tert.-Butyl und n-Butyl in Betracht, wobei der Alkylrest R₃ wie angegeben weitersubstituiert sein kann.

Als C₁₋₄-Alkyl, das durch Hydroxy, Halogen, Cyan, Carboxy, C₁₋₄-Alkoxy, Hydroxy-C₂₋₄-alkoxy, HO-(CH₂CH₂-O)₂₋₄-, Sulfo oder Sulfato substituiert ist, kommt für R₂ z.B. in Betracht: β-Sulfoäthyl, β-Hydroxyäthyl, β-(β′-Hydroxyäthoxy)-äthyl, β-Cyanäthyl, HO-(CH₂CH₂-O)₂-CH₂CH₂-, HO-(CH₂CH₂-O)₃-CH₂CH₂-, HO-(CH₂CH₂-O)₄-CH₂CH₂-.

Bevorzugt sind Reaktivfarbstoffe der Formel (1), worin n die Zahl 0 ist.

Ebenfalls bevorzugt sind die Reaktivfarbstoffe der Formel (1), worin die Sulfogruppe in 5-Stellung an den Benzring I gebunden ist.

Besonders bevorzugt sind die Reaktivfarbstoffe der Formel 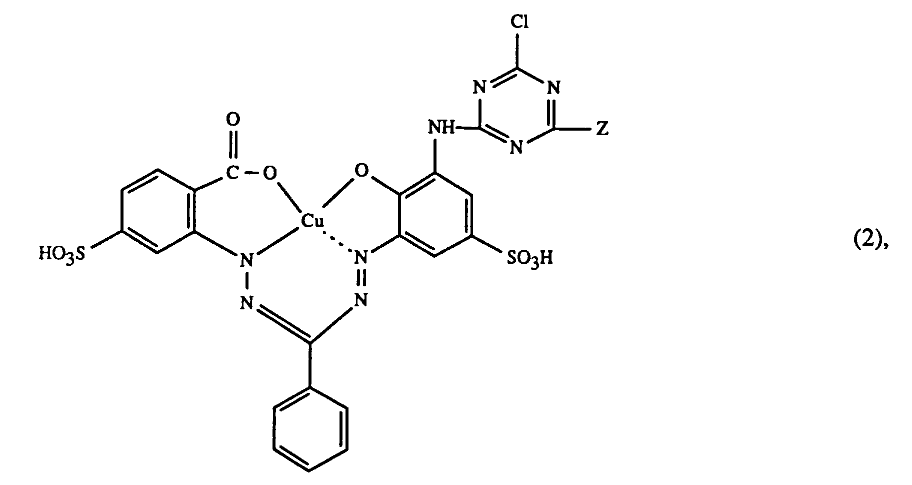 worin Z die unter Formel (1) angegebene Bedeutung hat.

Ganz besonders bevorzugt sind die Reaktivfarbstoffe der Formel (2), worin Z ein Rest der Formel (1a) ist, R₁ Methyl und R₂ β-Hydroxyäthyl, β-Sulfoäthyl, β-Sulfatoäthyl, β-(β'-Hydroxyäthoxy)-äthyl, HO-(CH₂CH₂-O)₂-CH₂CH₂-, HO-(CH₂CH₂-O)₃-CH₂CH₂- oder HO-(CH₂CH₂-O)₄-CH₂CH₂- ist.

Ganz besonders bevorzugt sind ferner Reaktivfarbstoffe der Formel (2), worin Z N-C₁₋₄-Alkylsulfoanilino, N-C₁₋₄-Alkyldisulfoanilino oder N-C₁₋₄-Alkyldisulfotoluidino ist.

Gegenstand der Erfindung ist ferner ein Verfahren zur Herstellung der Farbstoffe der Formel (1), welches dadurch gekennzeichnet ist, dass man eine Verbindung der Fomiel 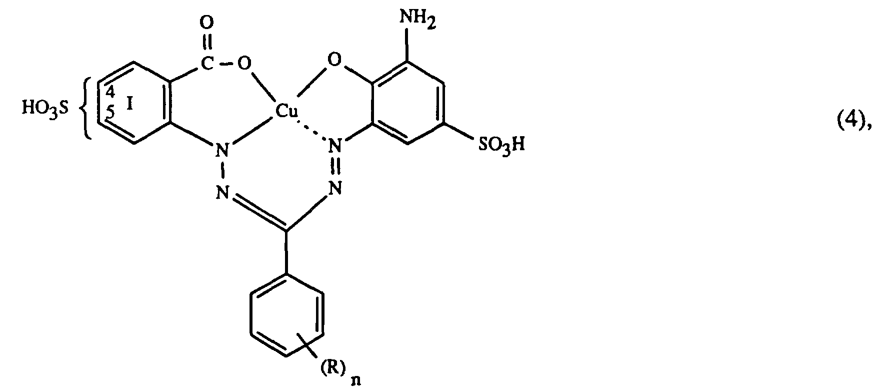 worin R und n die unter Formel (1) angegebenen Bedeutungen haben, mit einer den Rest der Formel 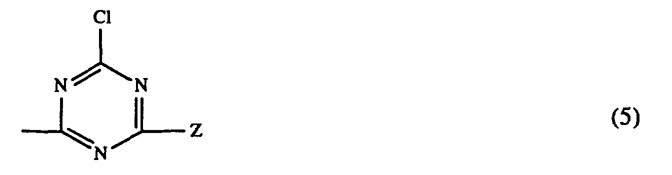 einführenden Verbindung, worin Z die unter Formel (1) angegebene Bedeutung hat, umsetzt, oder eine Verbindung der Formel (4) zunächst mit einer Verbindung der Formel 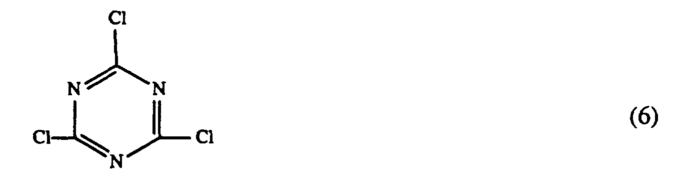 kondensiert, und das Kondensationsprodukt anschliessend mit einer Verbindung der Formel

H-Z (7),

worin Z die unter Formel (1) angegebene Bedeutung hat, umsetzt.

Eine bevorzugte Ausführungsform des erfindungsgemässen Verfahrens ist dadurch gekennzeichnet, dass man eine Verbindung der Formel (4) verwendet, worin n die Zahl 0 ist

Eine ebenfalls bevorzugte Ausführungsform des erfindungsgemässen Verfahrens ist dadurch gekennzeichnet, dass man von einer Verbindung der Formel (4) ausgeht, worin die Sulfogruppe in 5-Stellung an den Benzring I gebunden ist.

Eine besonders bevorzugte Ausführungsform des erfindungsgemässen Verfahrens ist dadurch gekennzeichnet, dass man von einer Verbindung der Formel (4) ausgeht, worin n die Zahl 0 ist und die Sulfogruppe in 5-Stellung an den Benzring I gebunden ist.

Die ganz besonders bevorzugten Reaktivfarbstoffe der Formel (2) werden erhalten, indem man eine Verbindung der Formel (4), worin n die Zahl 0 ist und die Sulfogruppe in 5-Stellung an den Benzring I gebunden ist mit 2,4,6-Trichlortriazin kondensiert und das primäre Kondensationsprodukt anschliessend mit einer Verbindung der Formel (7) umsetzt, worin Z ein Rest der Formel (la) ist, und R₁ Methyl und R₂ β-Hydroxyäthyl, β-Sulfoäthyl, β-Sulfatoäthyl, β-(β'-Hydroxyäthoxy)-äthyl oder HO-(CH₂CH₂-O)₂₋₄-CH₂CH₂- ist, oder worin Z N-C₁₋₄-Alkylsulfoanilino, N-C₁₋₄-Alkyldisulfoanilino oder N-C₁₋₄-Alkyldisulfotoluidino ist.

Die Verbindungen der Formel (4) sind an sich bekannt oder können in Analogie zu bekannten Verbindungen hergestellt werden. Zur Herstellung der Kupferkomplexe der vierzähnigen Formazane sei auf K. Venkataraman, The Chemistry of Synthetic Dyes, Volume VI, Seiten 287 bis 297, Academic Press New York und London (1972) und Ullmanns Enzyklopädie der technischen Chemie, Band 11, Seiten 714 bis 718, Verlag Chemie (1976) verwiesen.

Die den Rest der Formel (5) einführenden Verbindungen sowie die Verbindungen der Formeln (6) und (7) sind ebenfalls an sich bekannt oder können in Analogie zu bekannten Verbindungen hergestellt werden.

Bei der Herstellung derartiger Triazinfarbstoffe können die einzelnen Verfahrensschritte in unterschiedlicher Reihenfolge, gegebenenfalls teilweise auch gleichzeitig, ausgeführt werden. Dabei sind verschiedene Verfahrensvarianten möglich. Im allgemeinen führt man die Umsetzung schrittweise nacheinander aus. Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Die Kondensation des 2,4,6-Trichlor-s-triazins mit einer Verbindung der Formel (4) erfolgt vorzugsweise in wässriger Lösung oder Suspension, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Chlorwasserstoff laufend durch Zugabe wässriger Alkalihydroxide, -carbonate oder -bicarbonate neutralisiert. Für die weitere Umsetzung der so erhaltenen Chlortriazinfarbstoffe bzw. für die Umsetzung des 2,4,6-Trichlor-s-triazins mit den Aminen der Formel (7) setzt man die freien Amine oder deren Salze, bevorzugt in Form des Hydrochlorids, ein. Die Umsetzung wird bei Temperaturen etwa zwischen 0 und 40°C, bevorzugt zwischen 5 und 25°C, unter Zusatz säurebindender Mittel, bevorzugt Natriumcarbonat oder eines Überschusses des Amins, in einem pH-Bereich von 2 bis 10 bevorzugt 5 bis 8, durchgeführt.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mono- und Dinatriumphosphat oder von Natriumtripolyphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischenisolierung der Farbstoffe herstellen.

Gegenstand der Erfindung sind ferner lagerstabile, konzentrierte flüssige Farbstoffpräparationen der Reaktivfarbstoffe der Formel (1) sowie ihre Verwendung zur Herstellung von Klotzflotten, Färbebädern und vor allem Druckpasten, die zum Färben und Bedrucken von Fasermaterialien, insbesondere cellulosehaltigen Fasermaterialien verwendet werden.

Flüssige Farbstoffpräparationen haben Vorteile gegenüber der Pulverform, z.B. keine Staubentwicklung beim Ansetzen von Druckpasten sowie von Klotz- und Färbeflotten, keine Benetzungsprobleme durch Klumpenbildung, keine fleckigen Färbungen durch ungelöste Farbstoffpartikel. Solche flüssige Formulierungen sollten hoch konzentriert (mindestens 10 Gew.-% und vorzugsweise mehr als 15 Gew.-% Farbstoffgehalt) und mindestens über mehrere Monate in einem breiten Temperaturbereich (-10 bis +40°C) unverändert haltbar sein. Insbesondere enthalten die flüssigen Formulierungen 20 bis 50, vorzugsweise 35 bis 40, Gewichtsprozent Farbstoff.

Als Ausgangslösung bzw. -suspension zur Herstellung der Farbstoffpräparationen kann man die direkt aus der Synthese erhaltene wässrige, gegebenenfalls Lösungsmittel enthaltende Lösung bzw. Suspension oder eine wässrige Anschlämmung der feuchten Press- oder Filterkuchen der Rohfarbstoffe von unterschiedlichen Gehalt an unerwünschten gelösten Stoffen mit niedrigem Molekulargewicht, besonders von bei der Synthese des Farbstoffes anfallenden Nebenprodukten und gelösten anorganischen und organischen Salzen verwenden. In Fällen, in denen das Kondensationsprodukt nicht oder nur äusserst mühsam aussalzbar ist, kann auch direkt die rohe Kondensations- bzw. Neutralisationslösung verwendet werden. Vorteilhaft verwendet man Ausgangslösungen bzw. -suspensionen, die 2 bis 50 % Farbstoff enthalten.

Man kann aber auch von dem trockenen Rohfarbstoffpulver ausgehen, wenn man es zunächst mit Wasser anschlämmt.

Bei den erfindungsgemässen, konzentrierten flüssigen Präparationen handelt es sich in der Regel um echte oder kolloidale Lösungen. Sie sind dünnflüssig (Viskosität von etwa 5 bis 300 cp/20°C) und gut lagerstabil, d.h. sie bleiben mindestens mehrere Monate bei Temperaturen von -20 bis +60°C, insbesondere -10 bis +40°C in gebrauchsfähigem Zustand. Diese Präparationen können bei der Herstellung von Klotzflotten, Färbebädern und Druckpasten sowohl mit Wasser als auch mit organischen Lösungsmitteln und/oder Verdickungsmittel versetzt werden, ohne dass der Farbstoff ausfällt oder dass es zu anderen Inhomogenitäten kommt. Mit den genannten Klotzflotten, Färbebädern und Druckpasten kann man z.B. Textilmaterialien aus natürlichen oder synthetischen, insbesondere cellulose-haltigen Fasermaterialien in bekannter Weise färben oder bedrucken.

Besonders geeignet sind die erfindungsgemässen stabilen konzentrierten flüssigen Farbstoffpräparationen zur Herstellung von Druckpasten für das Bedrucken von Cellulose-Fasermaterialien sowie für kontinuierliche Färbeverfahren..

Ein Verfahren zur Herstellung einer erfindungsgemässen flüssigen Präparation ist z.B. aus der EP-A-0 333 656 bekannt, worin auf einer Anlage für Umkehr-Osmose die Farbstofflösung entsalzt und aufkonzentriert wird.

Die Anwendung membrangebundener Filtriertechniken zur Herstellung von Zubereitungen wasserlöslicher organischer Farbstoffe ist bekannt. Das Verfahren geht von den wässrigen Suspensionen des Rohfarbstoffs aus, die mit Hilfe eines ersten Membrantrennverfahrens weitgehend von in Wasser löslichen Nebenprodukten befreit und deren Salzgehalt auf etwa die Hälfte verringert werden; dann folgt ein zweites Membrantrennverfahren.

In diesem ersten Membrantrennverfahren permeieren als die löslichen Nebenprodukte und ein Teil der Salze durch ein Membran, während der Farbstoff und in Wasser unlösliche Anteile zurückgehalten werden.

In dem zweiten Membrantrennverfahren wird dann die Farbstoffsuspension - gegebenenfalls nach einer Verdünnung mit Wasser - entsalzt und aufkonzentriert und schliesslich in eine verkaufsfertige flüssige oder feste Farbstoffzubereitung übergeführt.

Die erfindungsgemäss eingesetzten Farbstofflösungen haben in der Regel einen Farbstoffgehalt von 5 bis 20 Gew.-% und einen Salzgehalt (anorganische Salze) von 1 bis 20 Gew.-%, insbesondere 1 bis 10 Gew.-%. Der pH-Wert liegt in der Regel im Bereich von 3 bis 10, vorzugsweise 3 bis 9. Unlösliche Anteile werden durch Mikrofiltration abgetrennt, die Aufkonzentrierung und Entsalzung wird so lange durchgeführt, bis ein Farbstoffgehalt von 10 bis 50 Gew.-% erreicht ist. Der Salzgehalt sinkt dabei unter 5 Gew.-%, z.B. 0,05 bis 5 Gew.-%, und vorzugsweise unter 1 Gew.-%, z.B. 0,05 bis 1 Gew.-%.

Zur Herstellung einer handelsfertigen Flüssigform ist die konzentrierte wässrige Farbstoffzubereitung gegebenenfalls nach Zugabe von den für Flüssigformulierungen üblichen Komponenten, wie Lösungsvermittlern, schaumdämpfenden Mitteln, Gefrierschutzmitteln, Feuchthaltemitteln, Tensiden, Puffersubstanzen und/oder Antimikrobika und Einstellen des pH-Wertes, nur noch durch Verdünnen und/oder mit Hilfe von Coupagemitteln auf einen vorgegebenen Endfarbstoffgehalt zu bringen. Die Farbstoffzubereitung kann aber auch, gegebenenfalls nach Zugabe und Zusätzen, wie Bindemitteln, Entstäubungsmitteln, Netzmitteln, Puffersubstanzen, wie Alkalipolyphosphaten, Dinatriumhydrogenphosphat, Zitronensäure und/oder Ethylendiamintetraessigsäure, und/oder Coupagemitteln, durch Wasserentzug, in ein festes Farbstoffpräparat übergeführt werden. Dank der erhöhten Farbstoffkonzentration benötigt man weniger Energie zum Trocknen. Man verwendet übliche Trocknungsverfahren, insbesondere die Sprühtrocknung.

Der pH-Wert der handelsfertigen Flüssigformulierung der Reaktivfarbstoffe wird in der Regel durch Zugabe von Puffersubstanzen eingestellt. Der pH-Wert liegt etwa im Bereich 7,0 bis 8,5, vorzugsweise 8,0.

Die genannten Hilfs- oder Zusatzmittel können der Farbstofflösung natürlich nicht nur vor deren endgültiger Formulierung als Handelsform zugesetzt, sondern bereits vor oder während des erfindungsgemässen Verfahrens in die Lösung des Rohfarbstoffs eingebracht werden und sind damit wenigstens teilweise bereits in der Farbstofflösung, aus der die endgültige handelsfertige Farbstoffformulierung hergestellt wird, vorhanden (z.B. Lösungsvermittler, Lösungsmittel, Tenside etc.). Eine Zugabe während des Verfahrens ist selbstverständlich nur dann sinnvoll, wenn das oder die Hilfs- oder Zusatzmittel nicht durch eines der Membrantrennverfahren wieder vollständig aus der Lösung entfernt werden.

Die erfindungsgemässen, konzentrierten flüssigen Präparationen der Reaktivfarbstoffe der Formel (1) enthalten somit 10 bis 50 Gewichtsprozent Farbstoff, 0,05 bis 5 Gewichtsprozent eines anorganischen Salzes, z.B. NaCl, KCl, LiCl, soviel Puffersubstanzen, z.B. Mono- und Dinatriumphosphat oder Natriumtripolyphosphat oder Mischungen von Puffersubstanzen, so dass ein pH-Wert zwischen 7,0 und 8,5 eingestellt werden kann, sowie Wasser.

Die Reaktivfarbstoffe der Formel (1) zeichnen sich durch hohe Reaktivität aus, und sie ergeben Färbungen mit guten Nass- und Lichtechtheiten. Besonders hervorzuheben ist es, dass die Farbstoffe eine gute Löslichkeit und hohe Farbstoff-Fixierung aufweisen, dass sie gut in der Cellulosefaser diffundieren, und dass sich die nichtifixierten Anteile leicht entfernen lassen.

Die Reaktivfarbstoffe der Formel (1) eignen sich zum Färben und Bedrucken der verschiedensten Materialien, wie Seide, Leder, Wolle, Polyamidfasern und Polyurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Sie eignen sich vor allem zum Bedrucken von textilen cellulosehaltigen Fasermaterialien, insbesondere Baumwolle, ebenso aber auch zum Bedrucken von stickstoffhaltigen Fasern, z.B. von Wolle, Seide oder Wolle enthaltenden Mischgeweben. Sie eignen sich insbesondere für schonende Druckverfahren, wie z.B. mit Natriumproprionat als Fixieralkali.

Es empfiehlt sich, die Färbungen und Drucke einem gründlichen Spülen mit kaltem und heissem Wasser, gegebenenfalls unter Zusatz eines dispergierend wirkenden und die Diffusion der nichtfixierten Anteile fördernden Mittels zu unterwerfen.

Bei der Anwendung in der Praxis werden die erfindungsgemässen Farbstoffe vorteilhaft als flüssige Färbe- oder Druckpräparate eingesetzt.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: Zu einer fein gemahlenen Suspension von 9,4 Teilen Cyanurchlorid in 25 Teilen Wasser wird eine neutrale Lösung von 30,0 Teilen der Formazanverbindung, die in Form der freien Säure der Formel 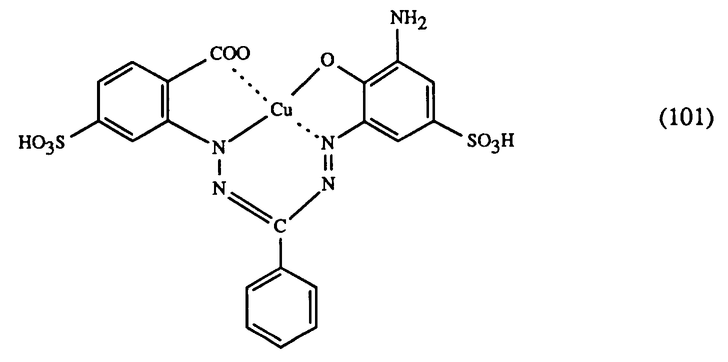 entspricht, in 400 Teilen Wasser so zulaufen gelassen, dass der pH-Wert durch gleichzeitiges Zudosieren von 1n-Natronlauge auf 4,5 gehalten werden kann. Die Temperatur wird durch Kühlung auf 0 auf 5° gehalten. Wenn das Ende der ersten Kondensation chromatographisch festgestellt worden ist, wird eine Lösung von 7,0 Teilen N-Methyltaurin in 65 Teilen Wasser zugestürzt. Durch Zugabe von Natronlauge wird der pH-Wert auf 8,5 gestellt und nach Aufheizen auf 40° bei 8,5 gehalten. Nach den Ende der zweiten Kondensation wird mit wenig konzentrierter Salzsäure der pH-Wert auf 7,0 gestellt. Nach Entsalzen und Eindampfen erhält man ein schwarz-blaues Pulver des Farbstoffes, der in Form der freien Säure der Formel 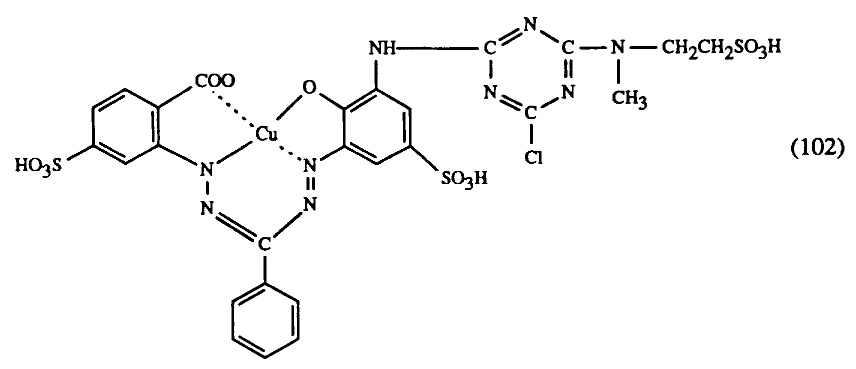 entspricht.

Mit dem erhaltenen Farbstoff kann Baumwolle in klarem neutralblauen Tönen sehr echt bedruckt oder gefärbt werden.

Weitere wertvolle Farbstoffe werden nach dem angegebenen Verfahren erhalten, wenn anstelle von N-Methyltaurin äquivalente Mengen der unten aufgeführten Amine verwendet werden.

| Beispiel | Amin | Farbton |
|---|---|---|
| 2 | N-Methyläthanolamin | blau |
| 3 | N-Methyl-β-(β′-hydroxyäthoxy)äthylamin | blau |
| 4 | N(CH₃)-(CH₂CH₂-O)₂-CH₂CH₂-OH | blau |
| 5 | N(CH₃)-(CH₂CH₂-O)₃-CH₂CH₂-OH | blau |
| 6 | N(CH₃)-(CH₂CH₂-O)₄-CH₂CH₂-OH | blau |
| 7 | N-Methyl-4-sulfoanilin | blau |
| 8 | N-Methyl-3-sulfoanilin | blau |
| 9 | N-Methyl-2,5-disulfoanilin | blau |
| 10 | N-Methyl-2,5-disulfo-4-methylanilin | blau |
| 11 | N-Methyl-2,4-disulfoanilin | blau |

Wenn man wie in den Beispielen 1 bis 11 angegeben verfährt aber anstelle der oben angegebenen Formazanverbindung eine Verbindung der Formel 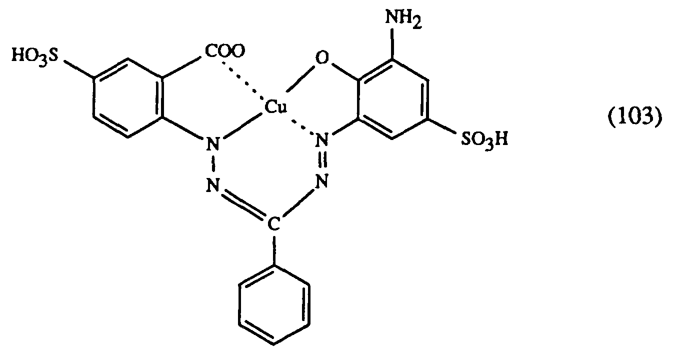 verwendet, so erhält man Farbstoffe mit ähnlich guten Eigenschaften, die Baumwolle in ähnlichem Farbton färben.

### Herstellung eines konzentrierten flüssigen Farbstoffpräparates

9 kg Presskuchen des Rohfarbstoffes der Formel von Beispiel 1 werden mit 35 kg Wasser angeschlämmt. Die erhaltene Suspension mit einem Trockengehalt von 7,9 % (ca. 5,9 % Farbstoff und 2,07 % NaCl) wird auf einer Anlage für Umkehr-Osmose (0,84 m Membranfläche), die wie in der EP-A-59782 beschrieben, hergestellt wurde und die einen "Cut-off-level" von 500 besitzt, entsalzt und aufkonzentriert. Die Umkehr-Osmose wird bei pH 6,5-7,5, 20°C und einem Druck von 25 bar in zwei Stufen durchgeführt:

### a) Entsalzung:

Nach der Zugabe von 40 l Wasser und anschliessender Entfernung von 40 l Permeat (mittlere Durchflussmenge ca. 20 l/Std.), erhält man eine Farbstofflösung mit einem Salzgehalt von 0,43 %.

### b) Aufkonzentrierung:

Nach der Entsalzung werden 33,1 l Permeat (mittlere Durchflussmenge ca. 12 l/Std.) entfernt. Man erhält 10,9 kg einer konzentrierten Farbstoff- lösung mit 23,6 % Trockengehalt, deren Natriumchloridgehalt geringer als 0,01 % ist.

94,4 Teile der so erhaltenen Farbstofflösung werden unter Rühren bei 40°C innerhalb von 10 Minuten mit 1,5 Teilen Natriumtripolyphosphat versetzt und mit 4,2 Teilen Wasser verdünnt. Man erhält eine Flüssigformulierung mit einem pH-Wert von 7,0 folgender Zusammensetzung:
22,3 Gew.-% Farbstoff
1,5 Gew.-% Natriumtripolyphosphat
ca. 76,3 Gew.-% Wasser
<0,1 Gew.-% Natriumchlorid

Die entstandene echte Lösung ist dünnflüssig (ca. 6 cP bei 20°C Brookfield, Spindel No. 2) und ist während mehrerer Monate bei -10°C bis +40°C unverändert haltbar. (Chemische und Physikalische Lagerstabilität)

Statt des im obigen Beispiel verwendeten Presskuchens kann auch eine äquivalente Menge der neutralisierten Syntheselösung (ev. nach entsprechender Einstellung der Konzentration) verwendet werden.

Die so hergestellte flüssige Handelsform kann anstelle des pulverförmigen Farbstoffs in allen Färbe- und Druck-Rezepten verwendet werden, man erhält die gleichen Ergebnisse.

### Färbevorschrift 1

2 Teile des gemäss Beispiel 1 erhaltenen Farbstoffes werden unter Zusatz von 5 bis 20 Teilen Harnstoff und 2 Teilen wasserfreiem Na₂CO₃ in 100 Teilen Wasser bei 20 bis 50°C gelöst. Mit der erhaltenen Lösung wird ein Baumwollgewebe imprägniert, so dass es um 50 bis 80 % seines Gewichtes zunimmt, und dann getrocknet. Danach wird während 1 ½ bis 5 Minuten bei 140 bis 210°C thermofixiert, dann während einer Viertelstunde in einer 0,1 %-igen Lösung eines ionenfreien Waschmittels bei Siedetemperatur geseift, gespült und getrocknet.

### Färbevorschrift 2

2 Teile des gemäss Beispiel 1 erhaltenen Farbstoffes werden in 2000 Teilen Wasser unter Zusatz von 120 Teilen NaCl oder wasserfreiem Na₂SO₄ bei 75°C gelöst. Man geht mit 100 Teilen eines Baumwollgewebes in dieses Färbebad ein und hält die Temperatur während 30 bis 60 Minuten konstant. Danach werden 10 Teile wasserfreies Na₂CO₃ und 4 ml 30 %-ige Natronlauge zugegeben. Die Temperatur wird weitere 45 bis 60 Minuten bei 75 bis 80°C gehalten, dann wird während 15 Minuten in einer 0,1 %-igen Lösung eines ionenfreien Waschmittels bei Siedetemperatur geseift, gespült und getrocknet.

### Färbevorschrift 3

2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Danach imprägniert man das Gewebe mit einer 20°C warmen Lösung, die pro Liter 5 g Natriumhydroxid und 300 g Natriumchlorid enthält, quetscht auf 75 % Gewichtszunahme ab, dämpft die Färbung während 30 Sekunden bei 100 bis 101°C, spült, seift während einer Viertelstunde in einer 0,3 %-igen Lösung eines ionenfreien Waschmittels bei Siedetemperatur, spült und trocknet.

### Färbevorschrift 4

2 Teile des gemäss Beispiel 1 erhaltenen Farbstoffes werden in 100 Teilen Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein. Man steigert die Temperatur auf 60°C, wobei nach 30 Minuten 40 Teile wasserfreies Na₂CO₃ und nochmals 60 Teile Natriumchlorid zugegeben werden. Man hält die Temperatur 30 Minuten auf 60°C, spült und seift dann die Färbung während 15 Minuten in einer 0,3 %-igen Lösung eines ionenfreien Waschmittels bei Siedetemperatur, spült und trocknet.

### Druckvorschrift 1

2 Teile des gemäss Beispiel 1 hergestellten Farbstoffes werden unter schnellem Rühren in 100 Teile einer Stammverdickung, enthaltend 45 Teile 5 %-ige Natriumalginatverdickung, 32 Teile Wasser, 20 Teile Harnstoff, 1 Teil m-nitrobenzolsulfonsaures Natrium sowie 2 Teile Natriumcarbonat, eingestreut. Mit der so erhaltenen Druckpaste bedruckt man ein Baumwollgewebe auf einer Rouleauxdruckmaschine und dämpft den erhaltenen bedruckten Stoff 4 bis 8 Minuten bei 100°C in gesättigtem Dampf. Das bedruckte Gewebe wird dann in kaltem und heissem Wasser gründlich gespült, wobei sich die nicht chemisch fixierten Anteile sehr leicht von der Faser entfernen lassen, und anschliessend getrocknet.

### Druckvorschrift 2

a) Eine Stammverdickung wird wie folgt zubereitet:
500 kg einer 5 %-igen Na-Alginatlösung von hoher Viskosität werden mit
125 kg Harnstoff
12,5 kg Na-Salz der Nitrobenzolsulfonsäure
75 kg einer 25 %-igen Na₂CO₃-Lösung und
287,5 kg Wasser
in einem Behälter mittels eines Rührwerkes gut durchmischt.

b) In 800 g dieser Stammverdickung werden nun manuell 200 g der flüssigen Formulierung des im Beispiel 1 angegebenen Reaktivfarbstoffes eingerührt. Man erhält eine gebrauchsfähige homogene Druckfarbe. Mit einem Teil dieser Druckfarbe wird ein Gewebe aus mercerisierter, gebleichter Baumwolle bedruckt.

Vom Rest der Druckfarbe werden 20 g abgewogen und wiederum manuell mit 980 g der obigen Stammverdickung vermischt und damit ebenfalls ein Gewebe aus mercerisierter, gebleichter Baumwolle bedruckt.

Nach dem Trocknen werden die beiden Drucke in gesättigtem Wasserdampf fixiert und anschliessend in kaltem und heissem Wasser gespült.

Es resultieren von ersten Druck ein farbstarkes, brillantes und egales Farbmotiv, vom zweiten Druck ein pastellfarbenes, absolut sprickelfreies und egales Motiv.

### Druckvorschrift 3

6 Teile des Reaktivfarbstoffes der Formel (102) aus Beispiel 1 werden unter schnellem Rühren in 94 Teile einer Stammverdickung, enthaltend 50 Teile 5%-ige Natriumalginat-Verdickung, 39,4 Teile Wasser, 3,5 Teile Natriumpropionat, 1 Teil m-nitrobenzolsulfonsaures Natrium sowie 0,1 Teil 40%-ige wässrige Formeldehyd-Lösung, eingestreut. Mit der so erhaltenen Druckpaste bedruckt man ein mercerisiertes Baumwollgewebe, trocknet und dämpft den erhaltenen bedrucken Stoff 8 Minuten bei 103°C im Sattdampf. Das bedruckte Gewebe wird dann gespült und anschliessend getrocknet. Es wird ein blauer Druck erhalten.

## Patentansprüche (Patentansprüche für folgende(n) Vertragsstaat(en): BE, CH, DE, FR, GB, IT, LI)

1. Faserreaktive Formazanfarbstoffe der Formel 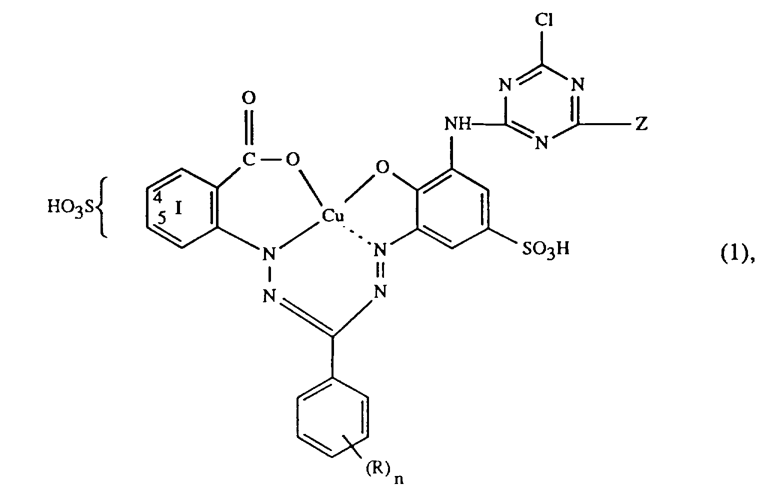 worin n die Zahl 0, 1, 2 oder 3 ist, und (R)ₙ für 0 bis 3 Substituenten, unabhängig voneinander, aus der Gruppe Halogen, C₁₋₄-Alkyl, C₁₋₄-Alkoxy, C₂₋₄-Alkanoylamino, Hydroxy, Carboxy und Sulfo steht, und Z ein Rest der Formel 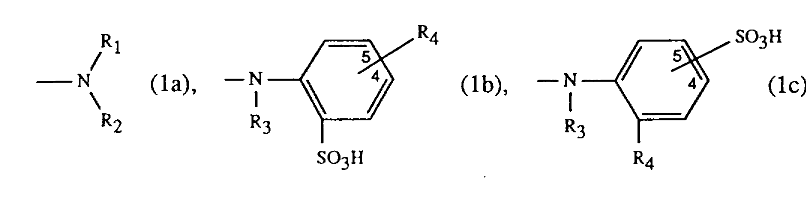 oder 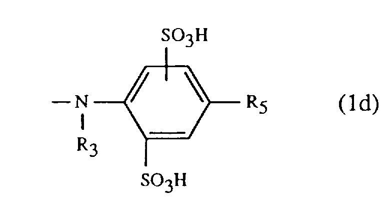 ist, worin R₁ C₁₋₄-Alkyl, R₂ C₁₋₄-Alkyl, das durch Hydroxy, Halogen, Cyan, Carboxy, C₁₋₄-Alkoxy, Hydroxy-C₂₋₄-alkoxy, HO-(CH₂CH₂-O)₂₋₄-, Sulfo oder Sulfato substituiert ist, R₃ C₁₋₄-Alkyl, das durch Hydroxy, Halogen, Cyan, Carboxy, C₁₋₄-Alkoxy, Hydroxy-C₂₋₄-alkoxy, Sulfo oder Sulfato substituiert sein kann, R₄ Wasserstoff, Halogen, C₁₋₄-Alkyl, C₁₋₄-Alkoxy, Carboxy oder Sulfo, R₅ Halogen, C₁₋₄-Alkyl oder C₁₋₄-Alkoxy und m die Zahl 0, 1, 2 oder 3 sind, und R₄ in Formel (1b) und die Sulfogruppe in Formel (1c) in 4- oder 5-Stellung an den Phenylring gebunden sind.

2. Faserreaktive Formazanfarbstoffe gemäss Anspruch 1, worin n die Zahl 0 ist.

3. Faserreaktive Formazanfarbstoffe gemäss Anspruch 1, worin die Sulfogruppe in 5-Stellung an den Benzring 1 gebunden ist.

4. Faserreaktive Formazanfarbstoffe gemäss Anspruch 1 der Formel 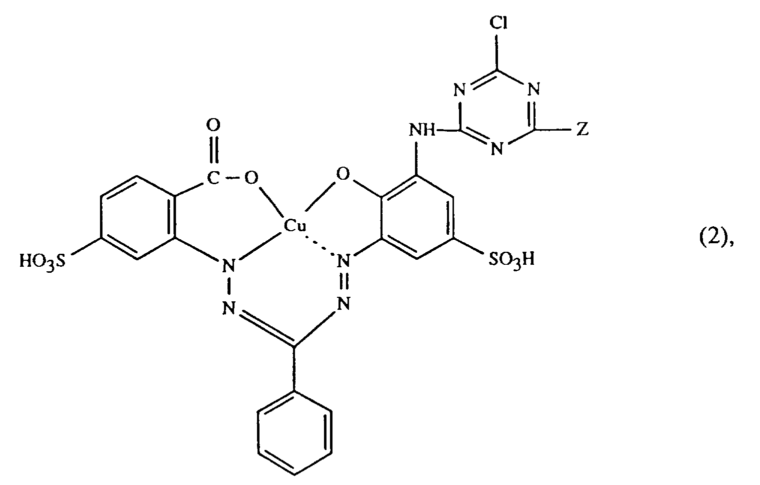 worin Z die in Anspruch 1 angegebene Bedeutung hat.

5. Faserreaktive Formazanfarbstoffe gemäss Anspruch 4, worin Z ein Rest der Formel (1a) ist, R₁ Methyl und R₂ β-Hydroxyäthyl, β-Sulfoäthyl, β-Sulfatoäthyl, β-(β'-Hydroxyäthoxy)-äthyl, HO-(CH₂CH₂-O)₂-CH₂CH₂-, HO-(CH₂CH₂-O)₃-CH₂CH₂- oder HO-(CH₂CH₂-O)₄-CH₂CH₂- ist.

6. Verfahren zur Herstellung der faserreaktiven Formazanfarbstoffe gemäss Anspruch 1, dadurch gekennzeichnet, dass man eine Verbindung der Formel 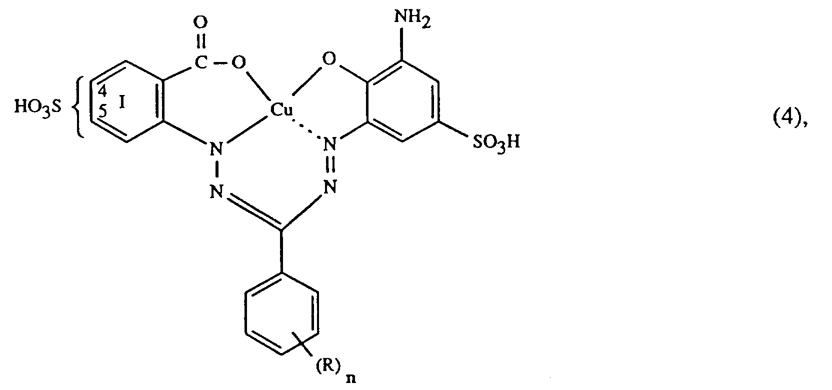 worin R und n die in Anspruch 1 angegebenen Bedeutungen haben, mit einer den Rest der Formel 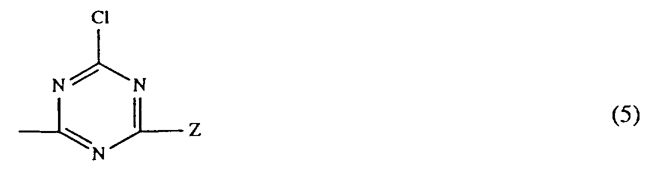 einführenden Verbindung, worin Z die in Anspruch 1 angegebene Bedeutung hat, umsetzt, oder eine Verbindung der Formel (4) zunächst mit einer Verbindung der Formel 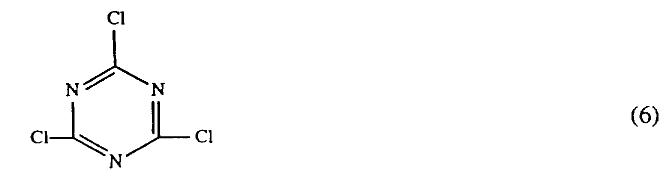 kondensiert, und das Kondensationsprodukt anschliessend mit einer Verbindung der Formel
H-Z (7),
worin Z die in Anspruch 1 angegebene Bedeutung hat, umsetzt.

7. Verwendung der faserreaktiven Formazanfarbstoffe gemäss Anspruch 1, zum Färben oder Bedrucken von cellulosehaltigen Fasermaterialien.

8. Verwendung gemäss Anspruch 7, zum Färben oder Bedrucken von Baumwolle.

9. Lagerstabile konzentrierte flüssige Farbstoffpräparationen von wasserlöslichen faserreaktiven Formazanfarbstoffen gemäss Anspruch 1.

## Patentansprüche (Patentansprüche für folgende(n) Vertragsstaat(en): ES)

1. Verfahren zur Herstellung von faserreaktiven Formazanfarbstoffen der Formel 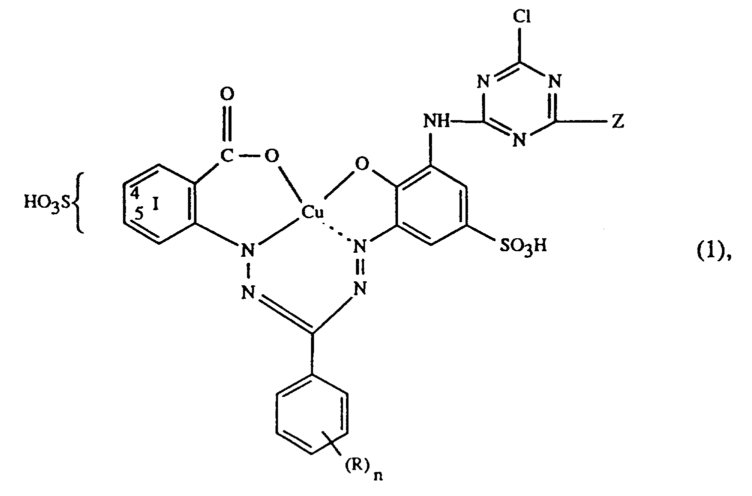 worin n die Zahl 0, 1, 2 oder 3 ist, und (R)ₙ für 0 bis 3 Substituenten, unabhängig voneinander, aus der Gruppe Halogen, C₁₋₄-Alkyl, C₁₋₄-Alkoxy, C₂₋₄-Alkanoylamino, Hydroxy, Carboxy und Sulfo steht, und Z ein Rest der Formel 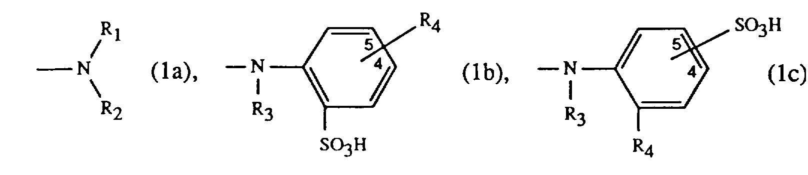 oder 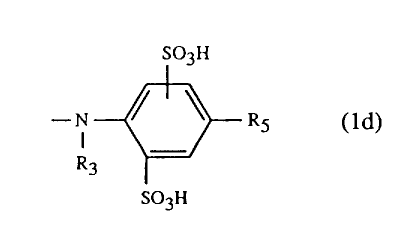 ist, worin R₁ C₁₋₄-Alkyl, R₂ C₁₋₄-Alkyl, das durch Hydroxy, Halogen, Cyan, Carboxy, C₁₋₄-Alkoxy, Hydroxy-C₂₋₄-alkoxy, HO-(CH₂CH₂-O)₂₋₄-, Sulfo oder Sulfato substituiert ist, R₃ C₁₋₄-Alkyl, das durch Hydroxy, Halogen, Cyan, Carboxy, C₁₋₄-Alkoxy, Hydroxy-C₂₋₄-alkoxy, Sulfo oder Sulfato substituiert sein kann, R₄ Wasserstoff, Halogen, C₁₋₄-Alkyl, C₁₋₄-Alkoxy, Carboxy oder Sulfo, R₅ Halogen, C₁₋₄-Alkyl oder C₁₋₄-Alkoxy und m die Zahl 0, 1, 2 oder 3 sind, und R₄ in Formel (1b) und die Sulfogruppe in Formel (1c) in 4- oder 5-Stellung an den Phenylring gebunden ist, dadurch gekennzeichnet, dass man eine Verbindung der Formel 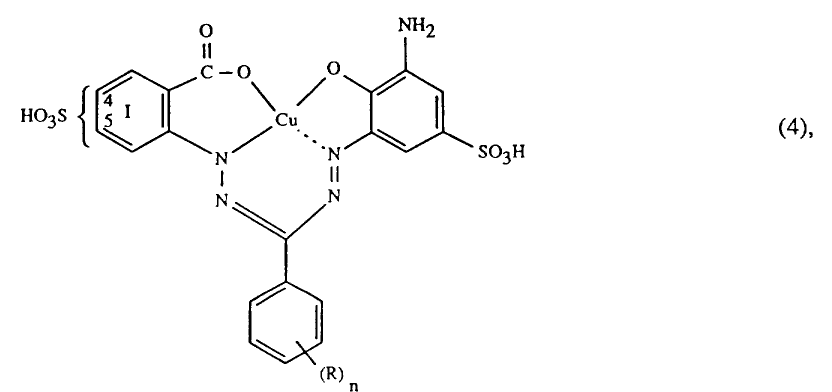 worin R und n die unter Formel (1) angegebenen Bedeutungen haben, mit einer den Rest der Formel 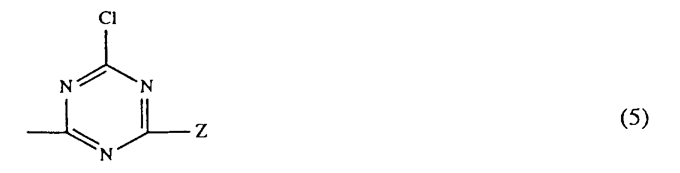 einführenden Verbindung, worin Z die unter Formel (1) angegebene Bedeutung hat, umsetzt, oder eine Verbindung der Formel (4) zunächst mit einer Verbindung der Fomiel 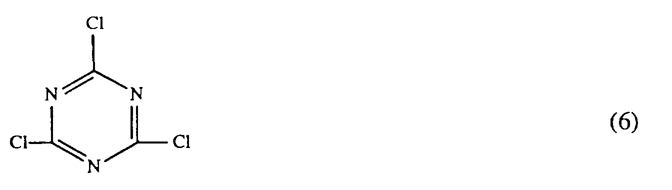 kondensiert, und das Kondensationsprodukt anschliessend mit einer Verbindung der Formel
H-Z (7),
worin Z die unter Formel (1) angegebene Bedeutung hat, umsetzt.

2. Verfahren gemäss Anspruch 1, dadurch gekennzeichnet, dass man eine Verbindung der Formel (4) verwendet, worin n die Zahl 0 ist.

3. Verfahren gemäss Anspruch 1, dadurch gekennzeichnet, dass man eine Verbindung der Formel (4) verwendet, worin die Sulfogruppe in 5-Stellung an den Benzring I gebunden ist.

4. Verfahren gemäss Anspruch 1, dadurch gekennzeichnet, dass man als Verbindung der Formel (4) eine Verbindung der Formel 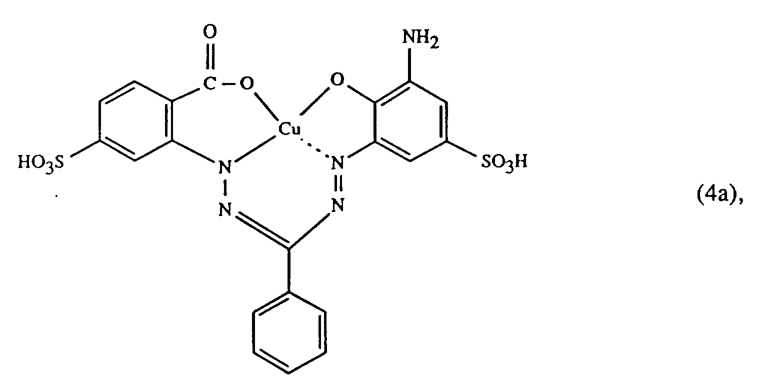 verwendet.

5. Verfahren gemäss Anspruch 4, dadurch gekennzeichnet, dass man Verbindungen der Formeln (5) oder (7) verwendet, worin Z ein Rest der Formel (1a) ist, R₁ Methyl und R₂ β-Hydroxyäthyl, β-Sulfoäthyl, β-Sulfatoäthyl, β-(β'-Hydroxyäthoxy)-äthyl, HO-(CH₂CH₂-O)₂-CH₂CH₂-, HO-(CH₂CH₂-O)₃-CH₂CH₂- oder HO-(CH₂CH₂-O)₄-CH₂CH₂- ist.

6. Verwendung der gemäss Anspruch 1 erhältlichen faserreaktiven Formazanfarbstoffe, zum Färben oder Bedrucken von cellulosehaltigen Fasermaterialien.

7. Verwendung gemäss Anspruch 6, zum Färben oder Bedrucken von Baumwolle.

8. Lagerstabile konzentrierte flüssige Farbstoffpräparationen gemäss Anspruch 1 erhältlichen wasserlöslichen fascrreaktiven Formazanfarbstoffen.

## Claims (Claims for the following Contracting State(s): BE, CH, DE, FR, GB, IT, LI)

1. A fibre-reactive formazan dye of the formula 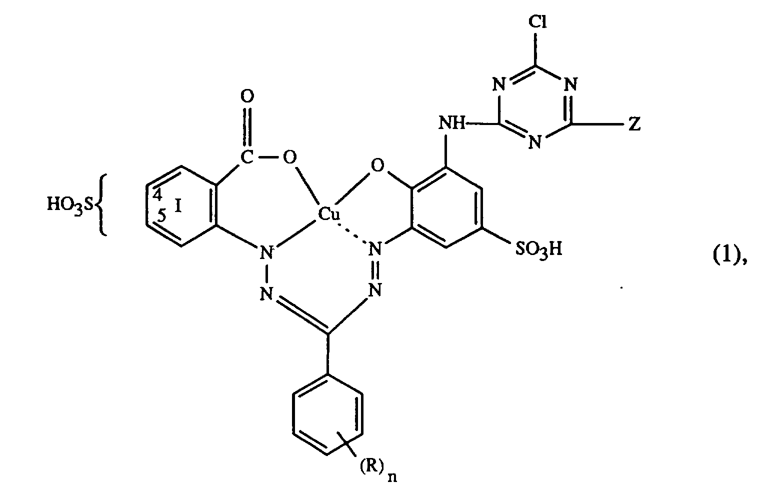 in which n is the number 0, 1, 2 or 3, (R)ₙ is 0 to 3 substituents, independent of one another, from the group comprising halogen, C₁₋₄alkyl, C₁₋₄alkoxy, C₂₋₄alkoylamino, hydroxyl, carboxyl and sulfo and Z is a radical of the formula 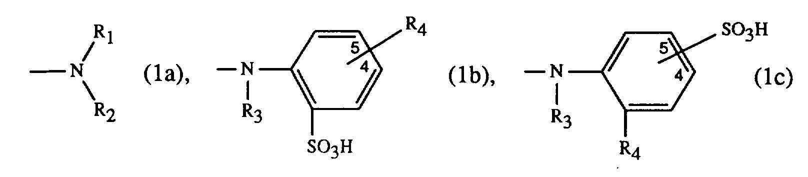 or 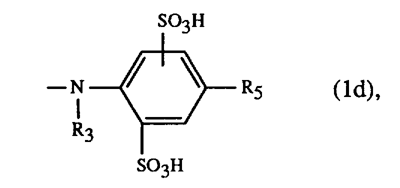 in which R₁ is C₁₋₄alkyl, R₂ is C₁₋₄alkyl, which is substituted by hydroxyl, halogen, cyano, carboxyl, C₁₋₄alkoxy, hydroxy-C₂₋₄alkoxy, HO-(CH₂CH₂-O)₂₋₄-, sulfo or sulfato, R₃ is C₁₋₄alkyl, which can be substituted by hydroxyl, halogen, cyano, carboxyl, C₁₋₄alkoxy, hydroxy-C₂₋₄alkoxy, sulfo or sulfato, R₄ is hydrogen, halogen, C₁₋₄alkyl, C₁₋₄alkoxy, carboxyl or sulfo, R₅ is halogen, C₁₋₄alkyl or C₁₋₄alkoxy and m is the number 0, 1, 2 or 3, and R₄ in formula (1b) and the sulfo group in formula (1c) are bonded to the phenyl ring in the 4- or 5-position.

2. A fibre-reactive formazan dye according to claim 1, in which n is the number 0.

3. A fibre-reactive formazan dye according to claim 1, in which the sulfo group is bonded to the benzene ring I in the 5-position.

4. A fibre-reactive formazan dye according to claim 1, of the formula 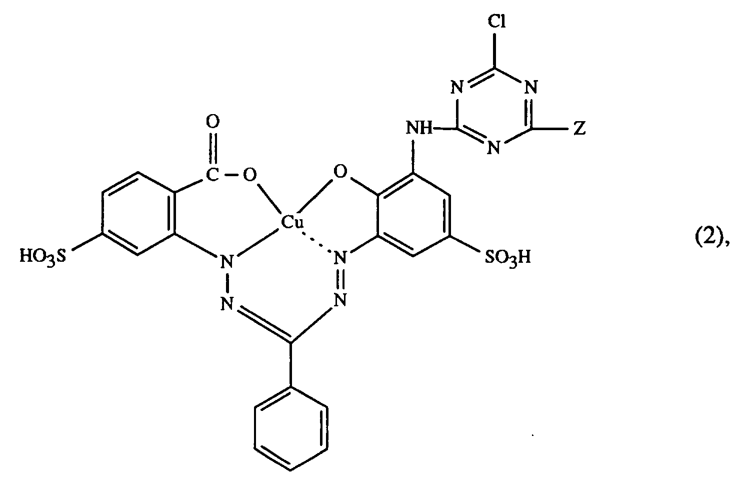 in which Z is as defined in claim 1.

5. A fibre-reactive formazan dye according to claim 4, in which Z is a radical of the formula (1a), R₁ is methyl and R₂ is β-hydroxyethyl, β-sulfoethyl, β-sulfatoethyl, β-(β'-hydroxyethoxy)-ethyl, HO-(CH₂CH₂-O)₂-CH₂CH₂-, HO-(CH₂CH₂-O)₃-CH₂CH₂- or HO-(CH₂CH₂-O)₄-CH₂CH₂-.

6. A process for the preparation of a fibre-reactive formazan dye according to claim 1, which comprises reacting a compound of the formula 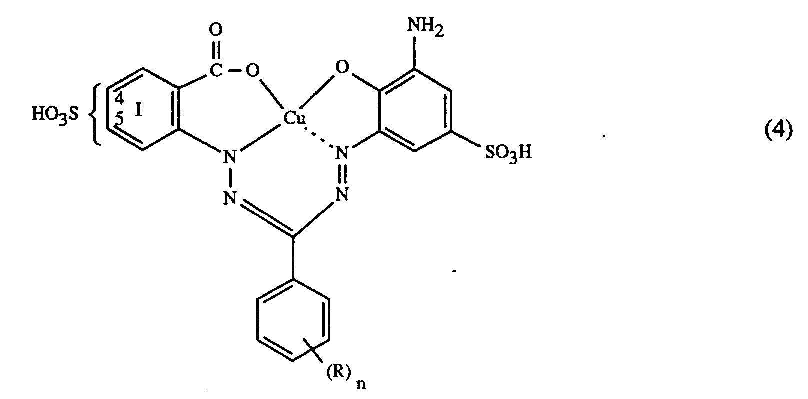 in which R and n are as defined in claim 1, with a compound which introduces a radical of the formula 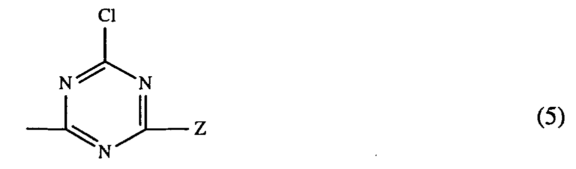 in which Z is as defined in claim 1, or first subjecting a compound of the formula (4) to a condensation reaction with a compound of the formula 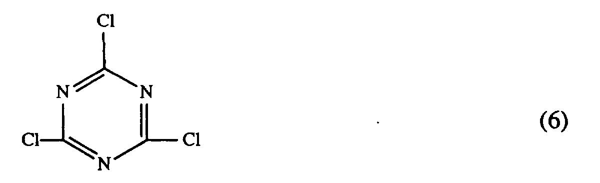 and then reacting the condensation product with a compound of the formula
H-Z (7)
in which Z is as defined in claim 1.

7. The use of a fibre-reactive formazan dye according to claim 1 for dyeing or printing cellulose-containing fibre materials.

8. The use according to claim 7, for dyeing or printing cotton.

9. A storage-stable concentrated liquid dye preparation of a water-soluble fibre-reactive formazan dye according to claim 1.

## Claims (Claims for the following Contracting State(s): ES)

1. A process for the preparation of a fibre-reactive formazan dye of the formula 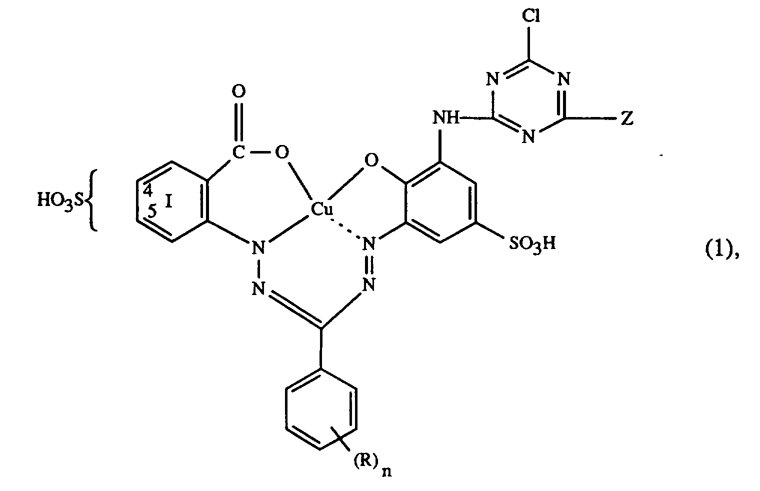 in which n is the number 0, 1, 2 or 3, (R)ₙ is 0 to 3 substituents, independent of one another, from the group comprising halogen, C₁₋₄alkyl, C₁₋₄alkoxy, C₂₋₄alkoylamino, hydroxyl, carboxyl and sulfo and Z is a radical of the formula 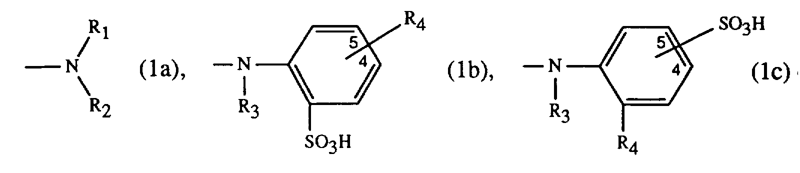 or 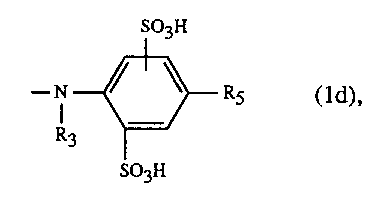 in which R₁ is C₁₋₄alkyl, R₂ is C₁₋₄alkyl, which is substituted by hydroxyl, halogen, cyano, carboxyl, C₁₋₄alkoxy, hydroxy-C₂₋₄alkoxy, HO-(CH₂CH₂-O)₂₋₄-, sulfo or sulfato, R₃ is C₁₋₄alkyl, which can be substituted by hydroxyl, halogen, cyano, carboxyl, C₁₋₄alkoxy, hydroxy-C₂₋₄alkoxy, sulfo or sulfato, R₄ is hydrogen, halogen, C₁₋₄alkyl, C₁₋₄alkoxy, carboxyl or sulfo, R₅ is halogen, C₁₋₄alkyl or C₁₋₄alkoxy and m is the number 0, 1, 2 or 3, and R4 in formula (1b) and the sulfo group in formula (1c) is bonded to the phenyl ring in the 4- or 5-position, which comprises reacting a compound of the formula 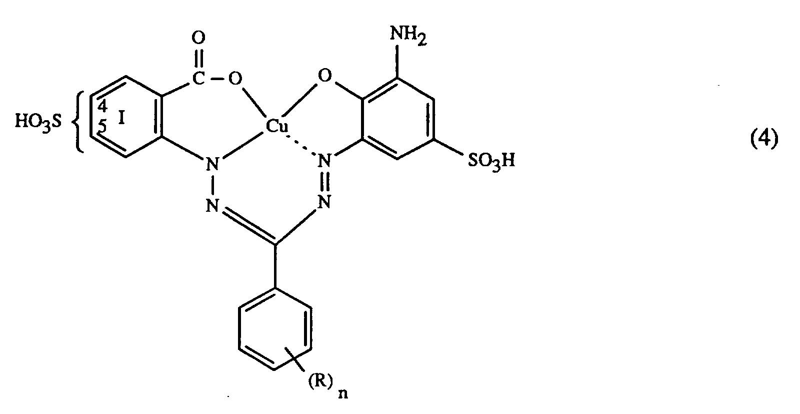 in which R and n are as defined in formula (1), with a compound which introduces a radical of the formula 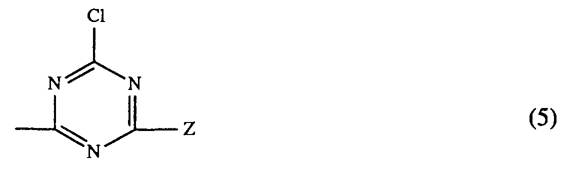 in which Z is as defined in formula (1), or first subjecting a compound of the formula (4) to a condensation reaction with a compound of the formula 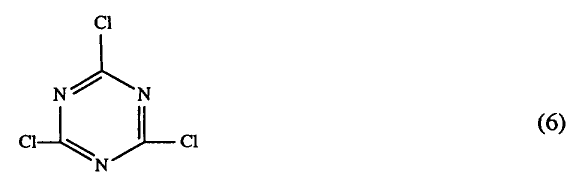 and then reacting the condensation product with a compound of the formula
H-Z (7)
in which Z is as defined in formula (1).

2. The process according to claim 1, which comprises using a compound of the formula (4) in which n is the number 0.

3. The process according to claim 1, which comprises using a compound of the formula (4) in which the sulfo group is bonded to the benzene ring I in the 5-position.

4. The process according to claim 1, which comprises using a compound of the formula 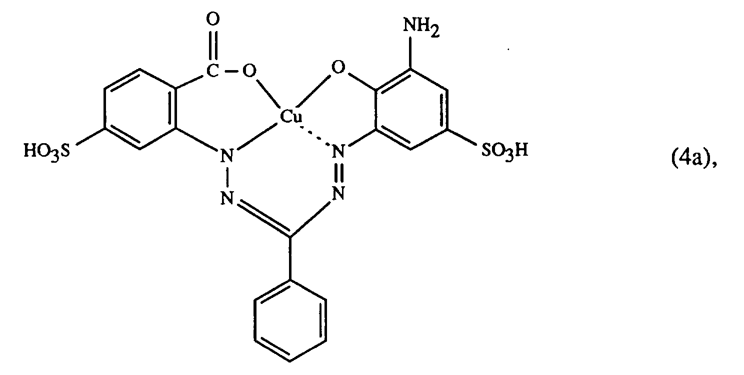 as compound of the formula (4).

5. The process according to claim 4, which comprises using compounds of the formulae (5) or (7) in which Z is a radical of the formula (1a), R₁ is methyl and R₂ is β-hydroxyethyl, β-sulfoethyl, β-sulfatoethyl, β-(β'-hydroxyethoxy)-ethyl, HO-(CH₂CH₂-O)₂-CH₂CH₂-, HO-(CH₂CH₂-O)₃-CH₂CH₂- or HO-(CH₂CH₂-O)₄-CH₂CH₂-.

6. The use of a fibre-reactive formazan dye obtained according to claim 1 for dyeing or printing cellulose-containing fibre materials.

7. The use according to claim 6, for dyeing or printing cotton.

8. A storage-stable concentrated liquid dye preparation of a water-soluble fibre-reactive formazan dye obtained according to claim 1.

## Revendications (Revendications pour l'(les) Etat(s) contractant(s) suivant(s): BE, CH, DE, FR, GB, IT, LI)

1. Colorants formazan réactifs vis-à-vis des fibres de formule 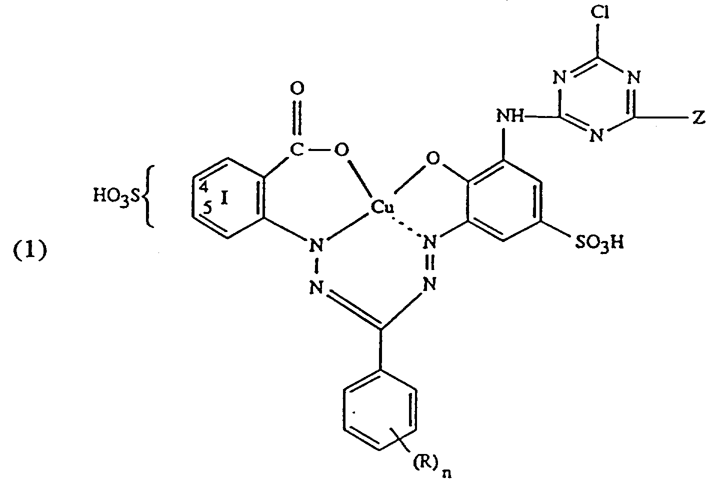 dans laquelle n vaut 0, 1, 2 ou 3, et (R)ₙ représente de 0 à 3 substituants choisis indépendamment dans le groupe formé par un atome d'halogène, un groupe alkyle en C₁₋₄, alcoxy en C₁₋₄, alcanoylamino en C₂₋₄, hydroxy, carboxy et sulfo, et Z un résidu de formule 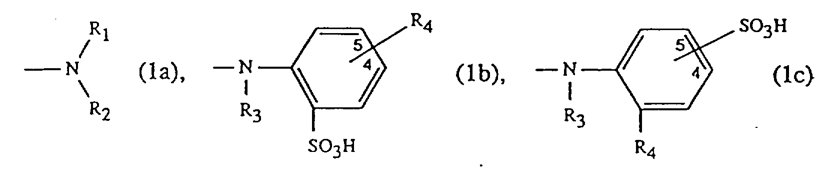 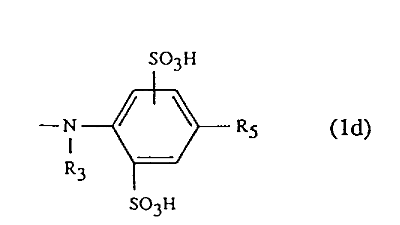 dans lesquelles R₁ représente un groupe alkyle en C₁₋₄, R₂ un groupe alkyle en C₁₋₄ substitué par un groupe hydroxy, halogéno, cyano, carboxy, alcoxy en C₁₋₄, hydroxyalcoxy en C₂₋₄, HO-(CH₂-CH₂-O)₂₋₄-, sulfo ou sulfato, R₃ un groupe alkyle en C₁₋₄, éventuellement substitué par un groupe hydroxy, halogéno, cyano, carboxy, alcoxy en C₁₋₄, hydroxyalcoxy en C₂₋₄, sulfo ou sulfato, R₄ représente un atome d'hydrogène, d'halogène, un groupe alkyle en C₁₋₄, alcoxy en C₁₋₄, carboxy ou sulfo, R₅ représente un atome d'halogène, un groupe alkyle en C₁₋₄ ou alcoxy en C₁₋₄, et m un nombre égal à 0, 1, 2 ou 3, et R₄ dans la formule (1b) et le groupe sulfo dans la formule (lc) sont liés au noyau phényle en position 4 ou 5.

2. Colorants formazan réactifs vis-à-vis des fibres conformes à la revendication 1 dans lesquels n vaut 0.

3. Colorants formazan réactifs vis-à-vis des fibres conformes à la revendication 1 dans lesquels le groupe sulfo est lié en position 5 au noyau benzène I.

4. Colorants formazan réactifs vis-à-vis des fibres conformes à la revendication de formule 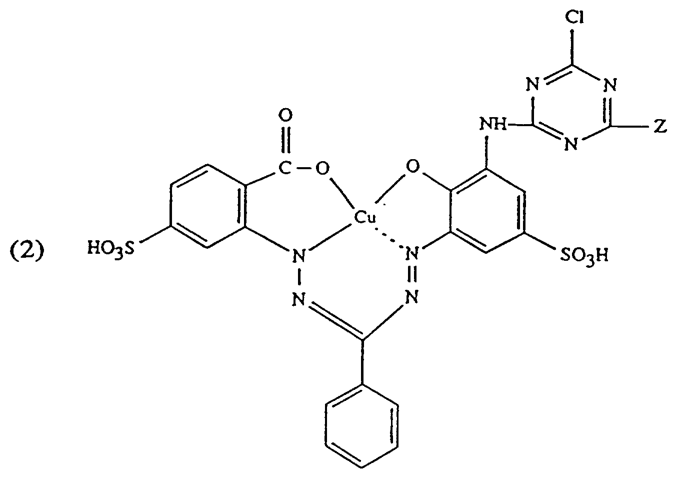 dans laquelle Z a la signification indiquée dans la revendication.

5. Colorants formazan réactifs vis-à-vis des fibres conformes à la revendication 4 dans lesquels Z est un résidu de formule (1a), R₁ un groupe méthyle et R₂ un résidu β-sulfoéthyle, β-hydroxyéthyle, β-sulfatoéthyle, β-(β'-hydroxyéthoxy)-éthyle, HO-(CH₂CH₂-O)₂-CH₂-CH₂-, HO-(CH₂-CH₂-O)₃-CH₂CH₂- ou HO-(CH₂CH₂-O)₄-CH₂CH₂-.

6. Procédé de préparation des colorants formazan réactifs vis-à-vis des fibres conformes à la revendication 1, caractérisé en ce que l'on fait réagir un composé de formule 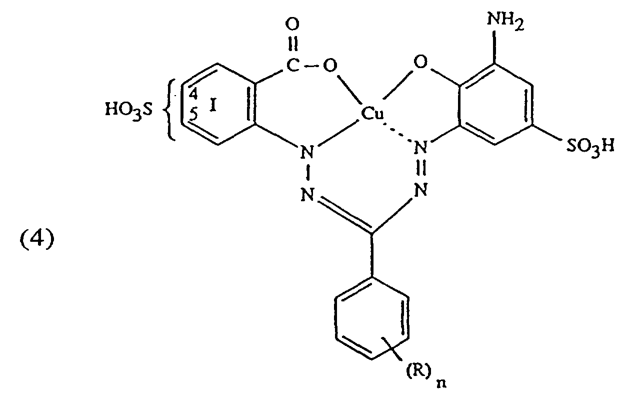 dans laquelle R et n ont la signification indiquée dans la revendication 1, avec un composé introduisant un résidu de formule 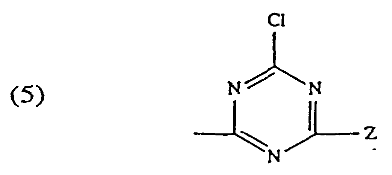 dans laquelle Z a la signification indiquée dans la revendication 1, ou en ce que l'on effectue dans un premier temps la condensation d'un composé de formule (4) avec un composé de formule 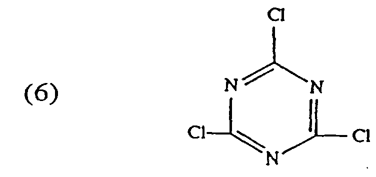 et en ce que l'on fait réagir ensuite le produit de condensation avec un composé de formule
(7) H-Z
dans laquelle Z a la signification indiquée dans la revendication 1.

7. Utilisation des colorants réactifs vis-à-vis des fibres conformes à la revendication 1 pour la teinture ou l'impression de matériaux fibreux contenant de la cellulose.

8. Utilisation conforme à la revendication 7 pour la teinture ou l'impression de coton.

9. Formulations liquides concentrées stables de colorants formazan hydrosolubles réactifs vis-à-vis des fibres conformes à la revendication 1.

## Revendications (Revendications pour l'(les) Etat(s) contractant(s) suivant(s): ES)

1. Procédé de préparation de colorants formazan réactifs vis-à-vis des fibres de formule 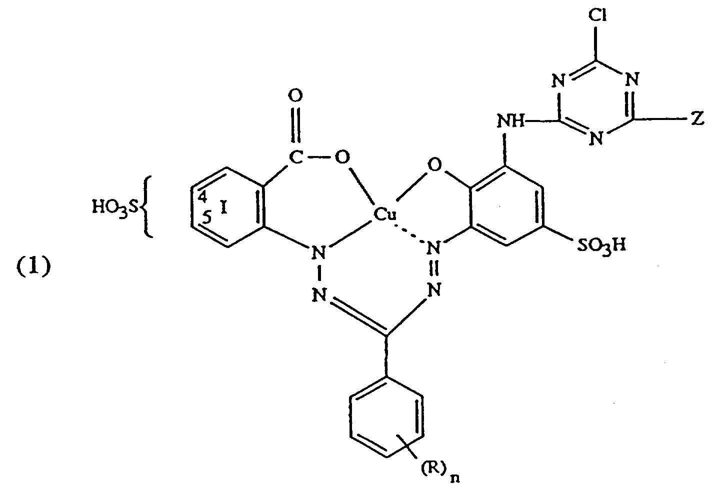 dans laquelle n vaut 0, 1, 2 ou 3, et (R)ₙ représente de 0 à 3 substituants choisis indépendamment dans le groupe formé par un atome d'halogène, un groupe alkyle en C₁₋₄, alcoxy en C₁₋₄, alcanoylamino en C₂₋₄, hydroxy, carboxy et sulfo, et Z un résidu de formule 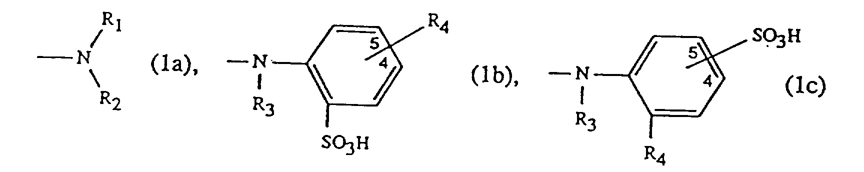 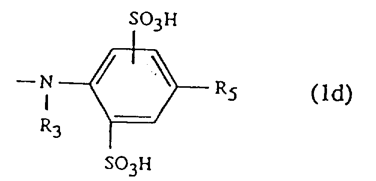 dans lesquelles R₁ représente un groupe alkyle en C₁₋₄, R₂ un groupe alkyle en C₁₋₄ substitué par un groupe hydroxy, halogéno, cyano, carboxy, alcoxy en C₁₋₄, hydroxyalcoxy en C₂₋₄, HO-(CH₂-CH₂-O)₂₋₄-, sulfo ou sulfato, R₃ un groupe alkyle en C₁₋₄, éventuellement substitué par un groupe hydroxy, halogéno, cyano, carboxy, alcoxy en C₁₋₄, hydroxyalcoxy en C₂₋₄, sulfo ou sulfato, R₄ représente un atome d'hydrogène, d'halogène, un groupe alkyle en C₁₋₄, alcoxy en C₁₋₄, carboxy ou sulfo, R₅ représente un atome d'halogène, un groupe alkyle en C₁₋₄ ou alcoxy en C₁₋₄, et m un nombre égal à 0, 1, 2 ou 3, et R₄ dans la formule (1b) et le groupe sulfo dans la formule (lc) sont liés au noyau phényle en position 4 ou 5,
caractérisé en ce que l'on fait réagir un composé de formule 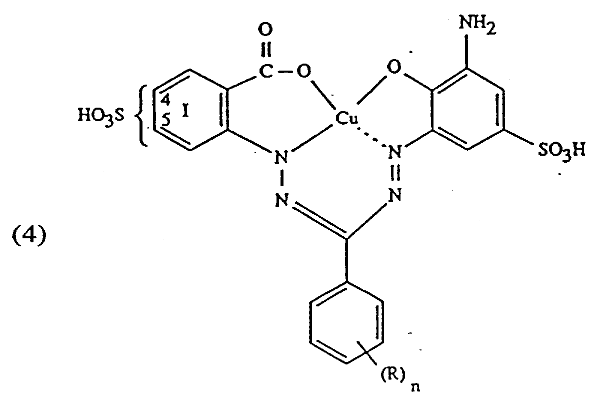 dans laquelle R et n ont la signification indiquée pour la formule (1), avec un composé introduisant un résidu de formule 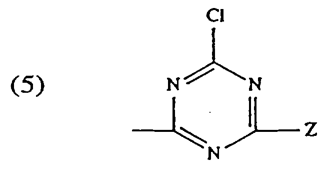 dans laquelle Z a la signification indiquée pour la formule (1), ou en ce que l'on effectue dans un premier temps la condensation d'un composé de formule (4) avec un composé de formule 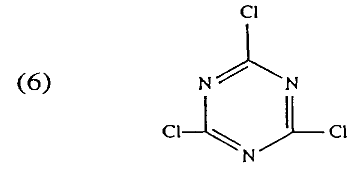 et en ce que l'on fait réagir ensuite le produit de condensation avec un composé de formule
(7) H-Z
dans laquelle Z a la signification indiquée pour la formule (1).

2. Procédé conforme à la revendication 1, caractérisé en ce que l'on utilise un composé de formule (4) dans laquelle n vaut 0.

3. Procédé conforme à la revendication 1, caractérisé en ce que l'on utilise un composé de formule (4) dans laquelle le groupe sulfo est lié en position 5 au noyau benzène I.

4. Procédé conforme à la revendication 1, caractérisé en ce que l'on utilise comme composé de formule (4) un composé de formule

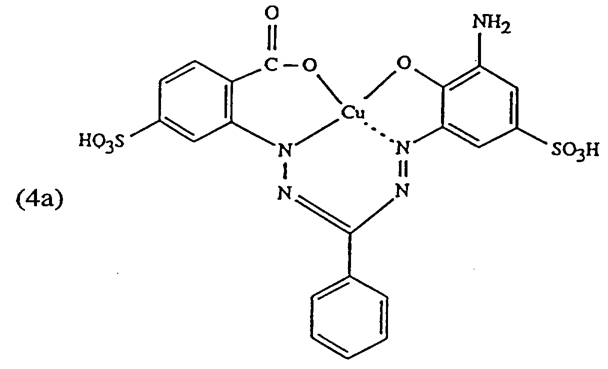

5. Procédé conforme à la revendication 4, caractérisé en ce que l'on utilise des composés de formule (5) ou (7) dans lesquels Z est un résidu de formule (1a), R₁ un groupe méthyle et R₂ un résidu β-sulfoéthyle, β-hydroxyéthyle, β-sulfatoéthyle, β-(β'-hydroxyéthoxy)-éthyle, HO-(CH₂CH₂-O)₂-CH₂-CH₂-, HO-(CH₂-CH₂-O)₃-CH₂CH₂- ou HO-(CH₂CH₂-O)₄-CH₂CH₂-.

6. Utilisation des colorants formazan réactifs vis-à-vis des fibres obtenus conformément à la revendication 1 pour la teinture ou l'impression de matériaux fibreux contenant de la cellulose.

7. Utilisation conforme à la revendication 6 pour la teinture ou l'impression de coton.

8. Formulations liquides concentrées stables au stockage de colorants formazan hydrosolubles réactifs vis-à-vis des fibres obtenus conformément à la revendication 1.
